# EUROPÄISCHE PATENTANMELDUNG

(11) **EP 2 336 835 A1**
(43) Veröffentlichungstag der Anmeldung: **22.06.2011**
(21) Anmeldenummer: 09179340.6
(22) Anmeldetag: 15.12.2009
(51) Int. Cl.: G05B 13/04, G05D 23/19

(54) **Verfahren und Anordnung zum prädiktiven Steuern von Raumtemperaturen in einem Gebäude unter Berücksichtigung der Kosten verschiedener Energiequellen**

(71) Anmelder: SIEMENS AKTIENGESELLSCHAFT, 80333 München (DE)
(72) Erfinder: Gwerder, Markus, 6312 Steinhausen (CH); Tödtli, Jürg, 8049 Zürich (CH)

(57) **Zusammenfassung**

In einem Verfahren zur Steuerung und Regelung mindestens einer Raumkomfortgrösse (T_{R1}; T_{R2}) in einem Gebäude werden Bedarfssignale (30) für kostenintensive Energie während einem eine bestimmte Zeitdauer umfassenden Zeitintervall abgespeichert, die im vergangenen Zeitintervall abgespeicherten Bedarfssignale (30) ausgewertet und zur Generierung von aktuellen Steuersignalen (10, 11 .. 15) für Stellglieder zur Nutzung von sogenannt freier oder kostengünstiger Energie verwendet. Durch das Verfahren wird Heizen, Kühlen, Lüften, Beleuchten und Beschatten von Räumen oder Raumzonen im Gebäude bezüglich des Verbrauchs von kostenintensiver oder sogenannt nicht freier Energie bei einer vorgegebenen Komfortanforderung minimierbar.

## Beschreibung

### Technisches Gebiet der Erfindung

Die Erfindung bezieht sich auf ein Verfahren sowie eine Anordnung zur Steuerung und Regelung mindestens einer Raumkomfortgrösse in einem Gebäude.

Solche Verfahren eignen sich beispielsweise zum Heizen, Kühlen, Lüften, Beleuchten und Beschatten von Räumen oder Raumzonen in Gebäuden und sind beispielsweise in einem Gebäudeautomationssystem implementiert.

### Stand der Technik

Verfahren und Anordnungen zum Steuern und/oder zum Regeln von Raumkomfortgrössen in einem Gebäude sind allgemein bekannt.

Ein Verfahren der im Oberbegriff des Anspruchs 1 genannten Art ist aus der WO2007/042371 A bekannt, in der vorgeschlagen wird, eine modellprädiktive Einrichtung zur Steuerung der Verwendung einer kostengünstigen Energiequelle einzusetzen.

### Technische Aufgabe der Erfindung und Lösung

Zum Heizen, Kühlen, Lüften und Beleuchten eines Gebäudes wird dazu geeignete Energie benötigt, deren Kosten einerseits direkt bei der Beschaffung, Aufbereitung oder Speicherung und andererseits bei der Beseitigung oder bei der Abgeltung von unerwünschten Nebeneffekten anfällt. Diese Energiekosten sind in der Regel zeitabhängig. So kann beispielsweise die Beschaffung eines Brennstoffs in einem gewissen Zeitpunkt relativ kostengünstig sein. Beim Verbrennen des Brennstoffs jedoch können Gase und Partikel anfallen, die beispielsweise Steuern oder Abgaben an den Staat verursachen, oder die Kosten verursachend zu filtern sind, so dass dieser Brennstoff insgesamt zum Heizen keine kostengünstige Energieform ist.

Im vorliegenden Text bedeutet freie Energie einen kostengünstigen Energieträger, der im betrachteten Zeitabschnitt gegenüber andern geeigneten und verfügbaren Energieträgern relativ kostengünstig - also nicht unbedingt im Wortsinn vollständig gratis - ist. Im Gegensatz dazu wird hier eine Energie als nicht frei oder als kostenintensiv bezeichnet, wenn diese im betrachteten Zeitabschnitt im Vergleich mit andern geeigneten Energieträgern relativ teuer ist. Typischerweise sind durch Fenster oder Gebäudehülle einstrahlende Sonnenwärme und durch Fenster einstrahlendes Sonnenlicht freie Energien, während mit Heizöl erzeugte Wärme oder mit Elektrizität erzeugte Kälte kostenintensive oder eben nicht freie Energien sind. Grundsätzlich ist ein Energieträger, der auf einem hohen Anteil an Primärenergie basiert, kostenintensiv. Ausserdem kann kostenintensive Energie aber auch bedeuten, dass der Verbrauch der entsprechenden Energie höhere Kosten verursacht, das heisst, dass eine schlechtere Wirtschaftlichkeit vorliegt.

Der Erfindung liegt die Aufgabe zugrunde, ein Verfahren zu schaffen, durch welches Heizen, Kühlen, Lüften, Beleuchten und Beschatten von Räumen oder Raumzonen in Gebäuden bezüglich des Verbrauchs von kostenintensiver oder sogenannt nicht freier Energie bei einer vorgegebenen Komfortanforderung minimierbar ist. Zudem soll eine Anordnung angegeben werden, mit der das Verfahren ausführbar ist.

Die genannte Aufgabe wird erfindungsgemäss durch die Merkmale der Ansprüche 1 und 17 gelöst. Vorteilhafte Ausgestaltungen ergeben sich aus den abhängigen Ansprüchen.

Nachfolgend werden Ausführungsbeispiele der Erfindung mit Hilfe von Zeichnungen näher erläutert.

### Angaben zu den Zeichnungen

Es zeigen:
Fig. 1 eine erfindungsgemässe Anordnung zum Steuern und/oder zum Regeln von Raumkomfortgrössen in einem Gebäude,
Fig. 2 eine schematische Darstellung eines Raumes mit Geräten für eine integrierte Raumautomation,
Fig. 3 ein beispielhafter zeitlicher Verlauf der gemessenen Temperatur im Raum,
Fig. 4 beispielhafte Regeln zum Ermitteln von Betriebszuständen zum Stellen von Jalousien,
Fig. 5 beispielhafte Regeln zum Ermitteln von Betriebszuständen zum Steuern einer freien Kühlung,
Fig. 6 beispielhafte Regeln zum Ermitteln von Betriebszuständen zum Steuern einer freien/natürlichen Lüftung in der Nacht,
Fig. 7 beispielhafte Regeln zum Ermitteln von Betriebszuständen zum Steuern einer mechanischen Lüftung in der Nacht, und
Fig. 8 beispielhafte Regeln zum Ermitteln von Betriebszuständen zum Steuern einer Einrichtung zur EnergieRückgewinnung.

### Detaillierte Beschreibung der Erfindung

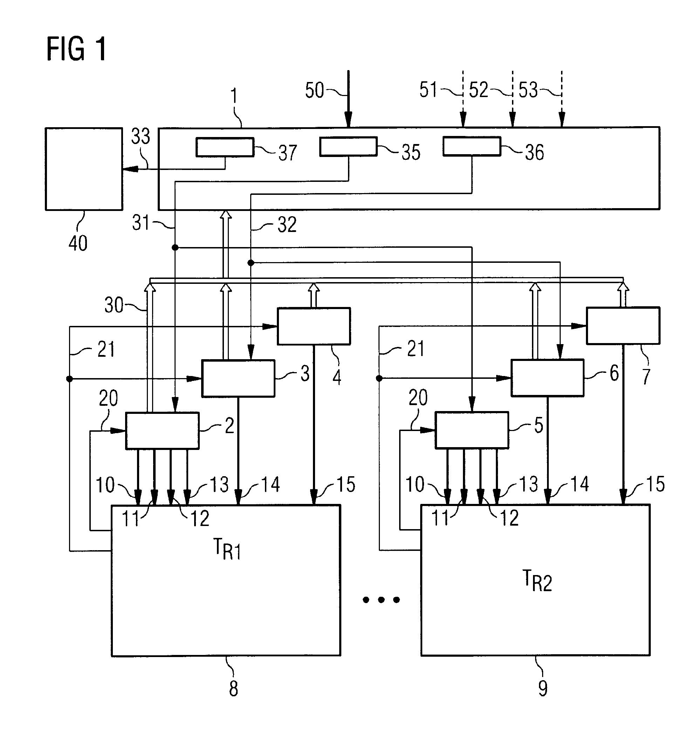

In der Fig. 1 bezeichnet 1 eine in einer oberen Hierarchie-Ebene angeordnete Steuereinrichtung zur optimierbaren Steuerung der Verwendung wenigstens einer kostengünstigen oder freien Energiequelle. In einer der oberen Hierarchie-Ebene untergeordneten unteren Hierarchie-Ebene sind Einrichtungen 2, 3, 4, 5, 6 und 7 zur unterlagerten Regelung und/oder Steuerung weiterer Energiequellen angeordnet.

Eine die beiden Hierarchie-Ebenen umfassende Anordnung ermöglicht die Steuerung und Regelung von Raumkomfortgrössen in einem Gebäude. Das Gebäude umfasst typischerweise eine Vielzahl von Räumen 8 und 9

Eine erste Einrichtung 2 und eine zweite Einrichtung 5 der unteren Hierarchie-Ebene steuern und/oder regeln Raumklimagrössen in den Räumen 8 und 9. Die gesteuerten bzw. geregelten Raumklimagrössen sind typischerweise mindestens die Raumtemperatur T_{R1} bzw. T_{R2} der Räume 8 bzw. 9 und je nach Bedarf weitere den Luftzustand im Raum 8 oder 9 wiedergebende Grössen, wie beispielsweise die Feuchte, der Kohlendioxydgehalt oder der Anteil an flüchtigen organischen Verbindungen (Volatile Organic Compounds VOC). Es versteht sich von selbst, dass es sich bei den Räumen 8 und 9 allgemein nicht nur um abgeschlossene Einzelräume, sondern auch um Raumzonen handeln kann.

Eine dritte Einrichtung 3 und eine vierte Einrichtung 6 der unteren Hierarchie-Ebene steuern und/oder regeln die Position oder Strahlungsdurchlässigkeit der an Fenstern des Raums 8 bzw. 9 wirksamen Beschattungseinrichtung. Die Beschattungseinrichtung kann beispielsweise durch Jalousien, Rollläden, Blenden oder Lamellen verwirklicht sein. Eine weitere Variante zur Realisierung der Beschattungseinrichtung wäre die Verwendung von Fenstern mit elektrisch schaltbarer Tönung oder mit integrierten elektrisch schaltbaren Mikrospiegeln.

Eine fünfte Einrichtung 4 und eine sechste Einrichtung 7 der unteren Hierarchie-Ebene steuern und/oder regeln die Helligkeit von in Raum 8 bzw. 9 angeordnete Beleuchtungskörpern.

Die zur Steuerung und/oder Regelung der Raumkomfortgrössen in den Räumen 8 und 9 einsetzbaren Gewerke des Heizungs-, des Kühlungs-, des Lüftungs-, des Beleuchtungs- und des Beschattungssystems werden also von den in der unteren Hierarchie-Ebene angeordneten Regel- und/oder Steuereinrichtungen 2, 3, 4, 5, 6 und 7 bedient.

Der Begriff Gewerk umfasst hier grundsätzlich die Gesamtheit der Geräte, Installationen und Mittel der zur Erreichung eines angestrebten Raumkomforts vorhandenen oder einsetzbaren Energiekreise zum Heizen, Kühlen, Lüften und Beleuchten.

Ausgangssignale der Regel- und/oder Steuereinrichtungen 2, 3, 4, 5, 6 und 7 zur Steuerung und/oder Regelung der Gewerke für die Räume 8 und 9 sind in der Fig. 1 durch Pfeile 10, 11, 12, 13, 14 und 15 symbolisiert. Für die Räume 8 und 9 erfolgen beispielhaft durch erste Regel- und/oder Steuereinrichtungen 2 beziehungsweise 5 gesteuertes Heizen 10, Kühlen 11, freies Kühlen 12, und Lüften 13, durch zweite Regel- und /oder Steuereinrichtungen 3 bzw. 6 gesteuerter Sonnenschutz 14 und durch dritte Regel- und/oder Steuereinrichtungen gesteuertes Beleuchten 15.

Zur Steuerung und/oder Regelung notwendigen Raumkomfortgrössen der Räume 8 und 9 werden durch entsprechende Sensoren erfasst und deren Messgrössen an die zugeordneten Regel- und/oder Steuereinrichtungen 2, 3, 4, 5, 6 und 7 zurückgeführt. Beispielhaft ist in Fig. 1 eine erste Messgrösse 20 der Raumtemperatur T_{R1} bzw. T_{R2} auf die zugeordnete Regel- und/oder Steuereinrichtung 2 bzw. 5 zurückgeführt. Mit 21 sind weitere, beispielhaft auf die entsprechenden Regel- und/oder Steuereinrichtungen 3, 4, 6 und 7 zurückgeführte Messgrössen von Raumkomfortgrössen bezeichnet.

Mit 30 ist ein von der unteren Hierarchieebene zur Steuereinrichtung 1 führender Datenfluss bezeichnet. Der Datenfluss 30 umfasst alle Information der unteren Hierarchieebene, die in der Steuereinrichtung 1, also in der oberen Hierarchieebene, zur Generierung von in der unteren Hierarchieebene nutzbaren Leitsignalen 31, 32 und 33 notwendig sind. Der Datenfluss 30 umfasst erfindungsgemäss Bedarfssignale für kostenintensive Energie, insbesondere zum Heizen und Kühlen. Mit Vorteil umfasst der Datenfluss 30 aber auch in den Räumen 8 und 9 erfasste Messwerte der Raumkomfortgrössen sowie Sollwerte von Raumkomfortgrössen und Information über die Raumbelegung oder Nutzung. Die Bedarfssignale für kostenintensive Energie zum Heizen, Kühlen, Lüften oder Beleuchten werden durch die in der unteren Hierarchieebene angeordneten Regel- und/oder Steuereinrichtungen 2, 3, 4, 5, 6, und 7 generiert.

In einer vorteilhaften Ausführung der ersten Regel- und/oder Steuereinrichtung 2 wie auch der zweiten Regel- und/oder Steuereinrichtung 5 wird ein Heiz- und Kühlbedarf eines zugeordneten Heiz- beziehungsweise Kühlaggregats berechnet und auf wenigstens eine entsprechende Variable abgebildet, die vorteilhafterweise gemäss einem bekannten Standard, beispielsweise gemäss Konnex oder BACnet, mindestens als Teil des Datenflusses 30 an die Steuereinheit 1 übertragen wird. Der berechnete Heiz- und Kühlbedarf ist auch die Basis zur Generierung der Ausgangssignale Heizen 10, Kühlen 11, freies Kühlen 12 und Lüften 13.

In einer vorteilhaften Ausführung der dritten Regel- und/oder Steuereinrichtung 3 wie auch der vierten Regel- und/oder Steuereinrichtung 6 wird ein Bedarf für Sonnenschutz oder Beschatten berechnet und auf eine entsprechende Variable abgebildet, die vorteilhafterweise gemäss einem bekannten Standard, beispielsweise gemäss Konnex oder BACnet, mindestens als Teil des Datenflusses 30 an die Steuereinheit 1 übertragen wird. Der berechnete Bedarf für den Sonnenschutz ist auch die Basis zur Generierung des Ausgangssignals Sonnenschutz 14.

Eine vorteilhafte Implementierung der Leitsignale 31, 32 und 33 wird durch die Definition von wenigstens einer Betriebsart oder auch mehreren Betriebsarten für freie und kostengünstige Energien, die im Gebäude nutzbar sind, erreicht. Mit Vorteil umfasst eine Betriebsart jeweils eine gewisse Menge von Betriebszuständen, wobei eine gewisse Betriebsart grundsätzlich in einem gewissen Zeitpunkt durchaus mehrere Betriebszustände aufweisen kann.

Eine durch die Steuereinrichtung 1 generierte erste Betriebsart 35 umfasst beispielhaft Betriebszustände "freie-Kühlung", "natürliche-Lüftung-nachts" und "mechanische-Lüftung-nachts", wobei jeder Betriebszustand seinerseits auf Betriebszustandswerte "Speicher-laden" oder "Speicher-entladen" setzbar ist.

In Anlehnung an eine in Computerprogrammen gebräuchliche Schreibweise für Datenstrukturen wird im Folgenden bei einem bestimmten Betriebszustandswert auch eine auf den zugehörigen Betriebszustand bezogene Schreibweise, in welcher der Betriebszustandswert mittels eines Punktes mit dem jeweiligen Betriebszustand verbunden ist, also beispielsweise "freie-Kühlung.Speicher-laden" oder "natürliche-Lüfung-nachts.Speicher-entladen" oder allgemein "Betriebszustand.Betriebszustandswert" verwendet.

Eine durch die Steuereinrichtung 1 generierte zweite Betriebsart 36 umfasst beispielhaft den Betriebszustand "Jalousienposition" oder "Lamellenstellung" mit Betriebszustandswerten "fest-positioniert","Speicher-laden" oder "Speicher-entladen; bei Bedarf umfasst der Betriebszustandswert "fest-positioniert" auch einen Wert für den Öffnungsgrad oder einen auf die Lamellenstellung bezogenen Wert.

Eine durch die Steuereinrichtung 1 generierte dritte Betriebsart 37 zur Bedienung einer Luftaufbereitungsanlage 40 umfasst beispielhaft den Betriebszustand "WärmeRückgewinnung" mit Betriebszustandswerten "Speicher-laden" und "Speicher-entladen".

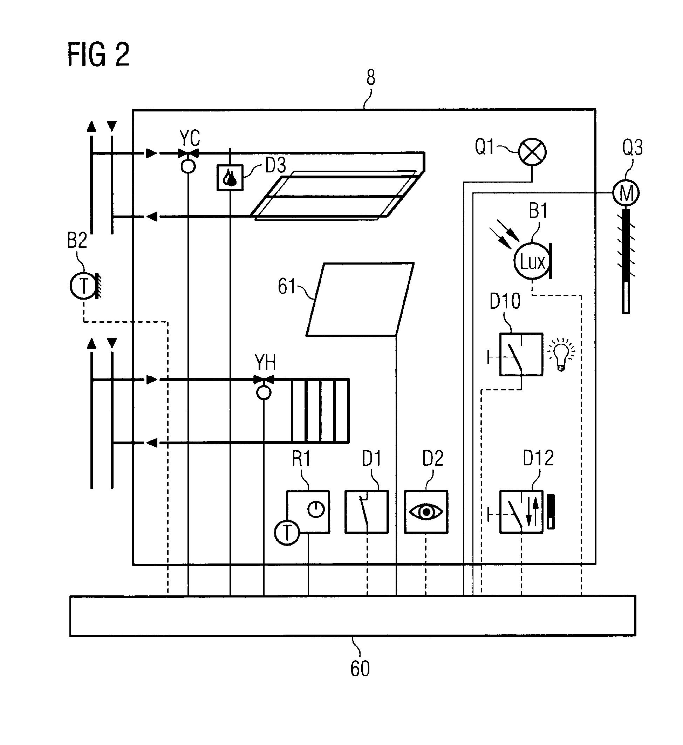

Es versteht sich von selbst, dass hier eingeführte konkrete Namen und Mengen für das oben beschriebene, auf Betriebsart beziehungsweise Betriebsarten sowie Betriebszustand und Betriebszustandswert basierende Konzept wohl im Zusammenhang mit den in den Figuren 1 und 2 dargestellten Beispielen eine sinnvolle Möglichkeit darstellen. Je nach Bedarf könne lediglich eine Betriebsart oder aber eine Vielzahl von Betriebsarten eingeführt werden. Ebenso kann die Anzahl Betriebszustände jeder eingeführten Betriebsart, wie auch die Anzahl der Betriebszustandswerte eines jeweiligen Betriebszustands ohne weiteres an die zu bedienenden Gewerke angepasst werden.

In einer vorteilhaften Ausführungsbeispiel ist jede Betriebsart 35, 36, 37 jeweils durch eine strukturierte Variable implementiert, die beispielhaft auch das entsprechende Leitsignal 31, 32 oder 33 verwirklicht. Grundsätzlich werden Informationen der Betriebsarten 35, 36 und 37 als Leitsignale 31, 32 und 33 an die Einrichtungen zur unterlagerten Regelung und/oder Steuerung 2, 3, 4, 5, 6, 7 bzw. an die Luftaufbereitungsanlage 40 weitergegeben.

In Weiterentwicklungen der Steuereinheit 1 verfügt die Steuereinheit 1 über weitere Dateneingänge, so mit Vorteil einen weiteren Dateneingang 50 für Vorhersagen von Wetter und/oder Gebäudebelegung, einen weiteren Dateneingang 51 für Information bezüglich der Strahlungsintensität der Sonne, einen weiteren Dateneingang 52 für die Aussentemperatur und einen weiteren Dateneingang 53 für die Temperatur eines kostengünstigen Kühlenergieträgers.

Das Ziel einer Optimierung beim Steuern und/Regeln von Raumkomfortgrössen in einem Gebäude ist, einen vorgegebenen Komfort bezüglich Raumtemperatur, Helligkeit und Luftqualität - also beispielsweise Feuchte, Kohlendioxydgehalt und Anteil an flüchtigen organischen Verbindungen - möglichst kostengünstig zu erreichen. Damit ist beim Heizen, Kühlen, Lüften, Beleuchten und Beschatten von Räumen oder Raumzonen im Gebäude der Verbrauch von kostenintensiver oder sogenannt nicht freier Energie unter Einhaltung der Komfortanforderung zu minimieren. Die über einen gewissen Zeitraum vorgenommene Optimierung erfolgt im Hinblick auf eine möglichst hohe Deckung der zum Heizen, Kühlen, Lüften und Beleuchten notwendigen Energie durch freie Energie. Um die besagte Optimierung zu erreichen, wird insbesondere auch die Eigenschaft des Gebäudes als thermischer Speicher genutzt. Vorteilhafterweise wird mit kostengünstigen Gewerken der Gebrauch von kostenintensiven Gewerken reduziert, und zwar auch dann, wenn aktuell kein Bedarf an kostenintensiven Gewerken besteht. In einer vorteilhaften Variante kann dies auch vorausschauend geschehen, beispielsweise durch Nutzung von Wetter- oder Raumbelegungsprognosen. Mit Vorteil wird bei der Optimierung mit in der Vergangenheit aufgezeichneten Bedarfsignalen gearbeitet, wobei beispielsweise angenommen wird, dass sich der Bedarf in der nächsten Zukunft etwa gleichartig fortsetzt. Simulationen haben gezeigt, dass eine derartige Persistenzprognose in vielen Fällen schon ausreicht, um signifikante Einsparungen zu erzielen.

Mit Vorteil werden aufgezeichnete Bedarfssignale kostenintensiv betriebener Gewerke mit zusätzlichen Grössen wie Ist- und Sollwerten von Raumkomfortgrössen und/oder Wetter- und Raumbelegungsprognosen ausgewertet, um die Steuerung und/oder Regelung der kostengünstig betriebenen Gewerke vorzunehmen. Mit Vorteil werden Betriebsarten definiert, die durch Regeln bestimmt werden, welche auf aufgezeichneten Bedarfssignalen und zusätzlichen Grössen basieren. Mit Vorteil sind die Betriebsarten so definiert, dass diese jeweils eine geltende Wertemenge umfassen können, so dass die Wertemenge beispielsweise eine Aussage bezüglich Jalousienstellung, freier Kühlung und nächtlicher Lüftung ergibt. Die durch die Regeln bestimmten Betriebsarten definieren wiederum klar definierte Aktionen für kostengünstig betriebene Gewerke.

Eine in der Fig. 2 mit 60 bezeichnete Funktionseinheit umfasst die Steuereinrichtung 1 (Fig. 1) und die über Datenkommunikationskanäle mit der Steuereinheit 1 verbundenen Einrichtungen 2, 3 und 4 zur unterlagerten Regelung und/oder Steuerung. Durch die Funktionseinheit 60 werden die vorgesehenen Raumkomfortgrössen im Raum 8 bezüglich eines vorgegebenen Ziels optimiert geregelt und/oder gesteuert.

Das in der Fig. 2 dargestellte Beispiel einer integrierten Raumautomation umfasst lediglich ein Minimum an Gewerken zur Darstellung des Prinzips der Erfindung. Das vorgestellte Verfahren zur optimierten Steuerung und Regelung von Raumkomfortgrössen ist grundsätzlich ohne weiteres anwendbar, auch wenn mehr oder weniger Gewerke, oder wenn andere kostenintensiv oder kostengünstig betreibbare Gewerke eingesetzt werden.

Die im Raum 8 beispielhaft angeordneten Geräte sind ein einen Temperaturfühler aufweisendes Raumgerät R1, ein Tageslichtfühler B1 zur Messung der Beleuchtungsstärke, ein Fensterschalter D1, ein Präsenzmelder D2, eine Bedieneinheit D12 zum indirekten Bedienen von Jalousien oder Jalousieantrieben Q3, eine weitere Bedieneinheit D10 zum indirekten Bedienen von Leuchtkörpern Q1, ein durch die Funktionseinheit 60 steuerbares Heizventil YH eines Heizkreises, und ein durch die Funktionseinheit 60 steuerbares Kühlventil YC sowie ein Taupunktfühler D3 eines Kühlkreises. Ausserhalb des Gebäudes ist ein Aussentemperaturfühler B2 angeordnet. Die Gewerke sind mit der Funktionseinheit 60 über Datenkommunikationskanäle verbunden. Die Datenkommunikationskanäle sind in bekannter Art drahtlos oder drahtgebunden realisiert. Bei Bedarf können Gewerke auch über die Funktionseinheit 60 elektrisch versorgt werden. Der Kühlkreis umfasst hier eine Kühldecke, welche mindestens zeitweise mit freier Energie - beispielsweise mittels Kühlturm - betreibbar ist.

In einer vorteilhaften Ausführungsvariante der Funktionseinheit 60 ist wenigstens eine durch die Steuereinheit 1 (Fig. 1) vorgegebene Betriebsart 35, 36 oder 37 auf einer Anzeigeeinheit 61 im Raum 8 erläuterbar. Die Anzeigeeinheit 61 ist beispielsweise ein nur zu diesem Zweck im Raum angeordnetes Gerät oder aber ein auf einem Bildschirm eines Personalcomputers generierbares Fenster. Durch die Anzeigeeinheit 61 kann bei den Bewohnern und Benutzern des Raums 8 eine höhere Akzeptanz bezüglich aktueller Werte von Raumkomfortgrössen oder beispielsweise der Position von Jalousien oder der Aktivität eines eingesetzten Lüftungssystems erreicht werden.

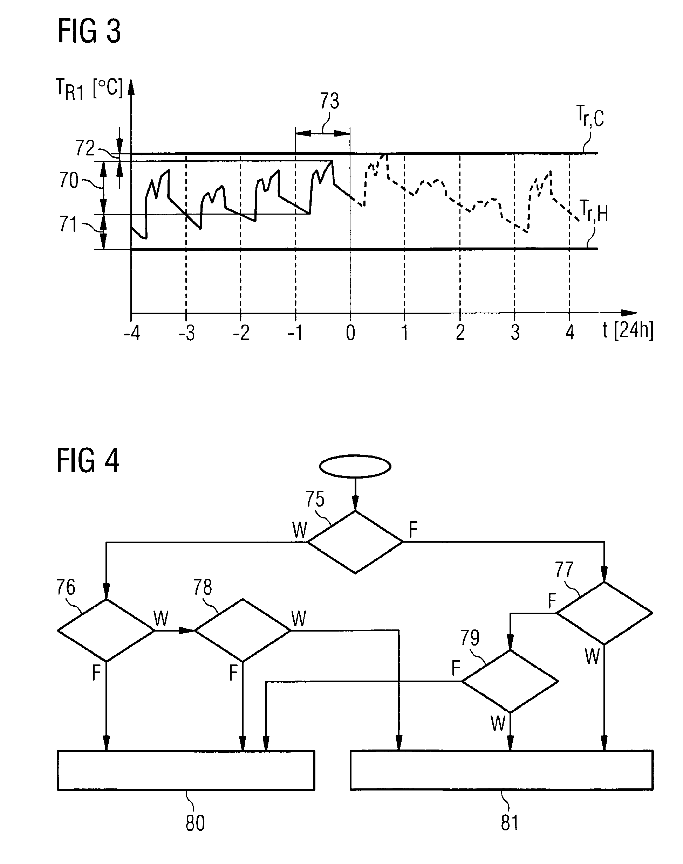

Als Beispiel für einen zeitabhängigen Verlauf einer Raumkomfortgrösse ist in der Fig. 3 der zeitabhängige Verlauf der Raumtemperatur T_{R1} oder T_{R2} in einem der Räume 8 beziehungsweise 9 dargestellt. Die Raumtemperatur T_{R1} verläuft in einem von einem einstellbaren unteren Temperatur-Sollwert T_{r,H} und einem einstellbaren oberen Temperatur-Sollwert Tᵣ,_{C} begrenzten Temperatur-Komfortband, was durch die Funktionseinheit 60 (Fig. 2) angestrebt wird. Eine

Zeitachse t ist in Tage zu 24 Stunden unterteilt, wobei die Gegenwart bzw. ein aktueller Zeitpunkt mit 0 bezeichnet ist. Eine erste Temperaturdifferenz 70 zeigt die Differenz der Raumtemperatur T_{R1} während eines gewissen unmittelbar vergangenen Zeitintervalls 73. Eine vorteilhafterweise konstante Zeitdauer des Zeitintervalls 73 ist massgebend für eine Analyse und Bewertung der in der Vergangenheit wirksamen Bedarfssignale für kostenintensive Energie zum Heizen, Kühlen, Lüften oder Beleuchten, die in der unteren Hierarchieebene durch die Regel- und/oder Steuereinrichtungen 2, 3, 4, 5, 6, oder 7 (Fig. 1) generiert wurden. Die Zeitdauer des Zeitintervalls 73 ist hier beispielhaft ein Tag beziehungsweise vierundzwanzig Stunden. Wenn das Zeitintervall 73 mit etwa 24 Stunden festgelegt wird, ergibt sich erfahrungsgemäss eine gute Voraussetzung zur Berechnung und Generierung von aktuellen Steuersignalen für entsprechende Stellglieder zur Nutzung von sogenannt freier oder kostengünstiger Energie. Grundsätzlich kann die Zeitdauer auch kleiner oder grösser als ein Tag gesetzt werden. Ein vorteilhaftes Zeitintervall 73 ergibt sich mit einer Zeitdauer zwischen etwa sechs Stunden und drei Tagen.

Eine zweite Temperaturdifferenz 71 bezeichnet eine im unmittelbar vergangenen Zeitintervall 73 ermittelte minimale Differenz Δϑ_{r,H} zwischen der Raumtemperatur T_{R1} und dem unteren Temperatur-Sollwert Tᵣ,_{H}. Die Differenz Δϑ_{r,H} wird negativ, wenn die Raumtemperatur T_{R1} im Zeitintervall 73 einen unter dem unteren Temperatur-Sollwert Tᵣ,_{H} liegenden Wert erreicht hat.

Eine dritte Temperaturdifferenz 72 bezeichnet eine im unmittelbar vergangenen Zeitintervall 73 ermittelte minimale Differenz Δϑ_{r,C} zwischen der Raumtemperatur T_{R1} und dem oberen Temperatur-Sollwert Tᵣ,_{C}. Die Differenz Δϑ_{r,C} wird negativ, wenn die Raumtemperatur T_{R1} im Zeitintervall 73 einen über dem oberen Temperatur-Sollwert T_{r,H} liegenden Wert erreicht hat.

Die Steuereinrichtung 1 (Fig. 1) ermittelt und speichert selbsttätig wenigstens eine Betriebsart 35, 36 oder 37, wobei zur Ermittlung der Betriebsart, deren Betriebszustände und Betriebszustandswerte, in einem vergangenen Zeitintervall 73 abgespeicherte Bedarfssignale ausgewertet werden, und gesetzte Betriebsarten zur Generierung von aktuellen Steuersignalen für Stellglieder zur Nutzung von sogenannt freier oder kostengünstiger Energie verwendet werden.

Die Fig. 4 illustriert mittels eines Ablaufdiagramms beispielhaft Regeln, nach denen Betriebszustandswerte des Betriebszustands "Jalousienposition" der zweiten

Betriebsart 36 (Fig. 1) zum entsprechenden Steuern der Jalousien definiert und gesetzt werden.

In einer ersten Entscheidung 75 wird der Boolsche Ausdruck "im Zeitintervall 73 wurde Heizbedarf festgestellt" ausgewertet, und, wenn der Ausdruck wahr ist, wird mit einer zweiten Entscheidung 76, andernfalls mit einer dritten Entscheidung 77 weitergefahren. In hier verwendeten Ablaufdiagrammen haben Entscheidungen jeweils zwei mögliche Ausgänge: einen mit "W" bezeichneten Ausgang, falls der entsprechende Boolsche Ausdruck wahr ist, und einen mit "F" bezeichneten Ausgang, falls der Boolsche Ausdruck falsch ist. In der zweiten Entscheidung 76 wird der Boolsche Ausdruck "im Zeitintervall 73 wurde Kühlbedarf festgestellt" ausgewertet, und, wenn der Ausdruck wahr ist, wird mit einer vierten Entscheidung 78 weitergefahren, andernfalls wird in einem ersten Schritt 80 der Betriebszustand "Jalousienposition" auf den Betriebszustandswert "Speicher-laden" gesetzt. In der vierten Entscheidung 78 wird der Boolsche Ausdruck "die letzte Aktion war Heizen" ausgewertet, und, wenn der Ausdruck wahr ist, wird in einem zweiten Schritt 81 der Betriebszustand "Jalousienposition" auf den Betriebszustandswert "Speicher-entladen" gesetzt, andernfalls wird der erste Schritt 80 ausgeführt, in dem der Betriebszustand "Jalousienposition" auf den Betriebszustandswert "Speicher-laden" gesetzt wird. In der dritten Entscheidung 77 wird der Boolsche Ausdruck "im Zeitintervall 73 wurde Kühlbedarf festgestellt" ausgewertet, und, wenn der Ausdruck wahr ist, wird der zweite Schritt 81 ausgeführt, in dem der Betriebszustand "Jalousienposition" auf den Betriebszustandswert "Speicher-entladen" gesetzt wird, andernfalls wird mit einer fünften Entscheidung 79 weitergefahren. In der fünften Entscheidung 79 wird der Boolsche Ausdruck "die Raumtemperatur ist hoch" ausgewertet, und, wenn der Ausdruck wahr ist, wird der zweite Schritt 81 ausgeführt, in dem der Betriebszustand "Jalousienposition" auf den Betriebszustandswert "Speicher-entladen" gesetzt wird, andernfalls wird der erste Schritt 80 ausgeführt, in dem der Betriebszustand "Jalousienposition" auf den Betriebszustandswert "Speicher-laden" gesetzt wird. Eine vorteilhafte Konkretisierung des Boolschen Ausdrucks "die Raumtemperatur ist hoch" wird durch einen Vergleich der zweiten Temperaturdifferenz 71 (Fig. 3) mit der dritten Temperaturdifferenz 72, also durch den Boolschen Ausdruck Δϑ_{r,H} ≥ Δϑ_{r,C} erreicht.

Abhängig vom - dem gesetzten Betriebszustandswert des Betriebszustands "Jalousienposition" entsprechenden - Leitsignal 32, wird in der für die Bedienung der Beschattungseinrichtung im Raum 8 zuständigen dritten Einrichtung 3 das Ausgangssignal Sonnenschutz 14 generiert. Falls "Jalousienposition.Speicher-laden" gesetzt ist, werden vorteilhafterweise nachts die Jalousien vollständig geschlossen und während des Tages vollständig geöffnet. Falls jedoch "Jalousienposition.Speicher-entladen" gesetzt ist, werden die Jalousien nachts vollständig geöffnet und während des Tages, sofern der Raum 8 besetzt ist, werden die Position der Jalousien auf einen unteren Sollwert der Beleuchtungsstärke geregelt. Im unbesetzten Raum 8 jedoch werden die Jalousien tagsüber vollständig geschlossen, falls "Jalousienposition.Speicher-entladen" gesetzt ist.

Das Leitsignal 32 ermöglicht also einen selbsttätigen energieeffizienten Betrieb der Gewerke. In einer weiteren Ausführungsvariante des Verfahrens zur Steuerung und/oder Regelung der Raumkomfortgrössen wird einem Raumbenutzer erlaubt, gewisse, durch in der Steuereinrichtung 1 generierte Leitsignale beeinflusste Stellglieder manuell zu übersteuern. So kann auf Kosten der Energieeffizienz beispielsweise dem Raumbenutzer erlaubt werden, die selbsttätig angefahrene Jalousienposition manuell zu übersteuern.

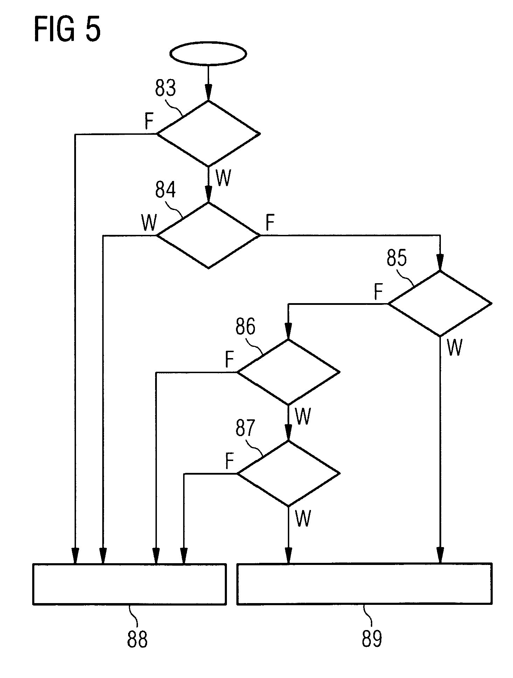

Die Fig. 5 illustriert mittels eines Ablaufdiagramms beispielhaft Regeln, nach denen Betriebszustandswerte des Betriebszustands "freie-Kühlung" der ersten Betriebsart 35 (Fig. 1) zum entsprechenden Steuern oder Regeln einer Einrichtung zum Kühlen mit freier Energie definiert und gesetzt werden.

In einer sechsten Entscheidung 83 wird der Boolsche Ausdruck "der Raum ist besetzt und es ist Nacht" ausgewertet, und, wenn der Ausdruck wahr ist, wird mit einer siebten Entscheidung 84 weitergefahren, andernfalls wird in einem dritten Schritt 88 der Betriebszustand "freie-Kühlung" auf den Betriebszustandswert "Speicher-laden" gesetzt. In der siebten Entscheidung 84 wird der Boolsche Ausdruck "im Zeitintervall 73 wurde Heizbedarf festgestellt" ausgewertet, und, wenn der Ausdruck wahr ist, wird der dritte Schritt 88 ausgeführt, in dem der Betriebszustand "freie-Kühlung" auf den Betriebszustandswert "Speicher-laden" gesetzt wird, andernfalls wird mit einer achten Entscheidung 85 weitergefahren. In der achten Entscheidung 85 wird der Boolsche Ausdruck "im Zeitintervall 73 wurde Kühlbedarf festgestellt und keine freie Kühlung" ausgewertet, und, wenn der Ausdruck wahr ist, wird ein vierter Schritt 89 ausgeführt, in dem der Betriebszustand "freie-Kühlung" auf den Betriebszustandswert "Speicher-entladen" gesetzt wird, andernfalls wird mit einer neunten Entscheidung 86 weitergefahren. In der neunten Entscheidung 86 wird der Boolsche Ausdruck "die Raumtemperatur ist hoch" ausgewertet, und, wenn der Ausdruck wahr ist, wird mit einer zehnten Entscheidung 87 weitergefahren, andernfalls wird im dritten Schritt 88 der Betriebszustand "freie-Kühlung" auf den Betriebszustandswert "Speicher-laden" gesetzt. Eine vorteilhafte Konkretisierung des Boolschen Ausdrucks "die Raumtemperatur ist hoch" wird durch einen Vergleich der zweiten Temperaturdifferenz 71 (Fig. 3) mit der dritten Temperaturdifferenz 72, also durch den Boolschen Ausdruck Δϑ_{r,H} ≥ Δϑ_{r,C} erreicht. In der zehnten Entscheidung 87 wird der Boolsche Ausdruck "möglicherweise überschreitet die Raumtemperatur den oberen Temperatur-Sollwert" ausgewertet, und, wenn der Ausdruck wahr ist, wird der vierte Schritt 89 ausgeführt, in dem der Betriebszustand "freie-Kühlung" auf den Betriebszustandswert "Speicher-entladen" gesetzt wird, andernfalls wird der dritte Schritt 88 ausgeführt, in dem der Betriebszustand "freie-Kühlung" auf den Betriebszustandswert "Speicher-laden" gesetzt wird.

Abhängig vom - dem gesetzten Betriebszustandswert des Betriebszustands "freie-Kühlung" entsprechenden - Leitsignal 31, wird in der für die Bedienung der freien Kühlung im Raum 8 zuständigen ersten Einrichtung 2 das Ausgangssignal freies Kühlen 12 generiert. Falls "freie-Kühlung.Speicher-laden" gesetzt ist, wird vorteilhafterweise die freie Kühlung nicht aktiviert, andernfalls wird die freie Kühlung dann aktiviert, wenn auf Grund der herrschenden Temperaturverhältnisse durch freie Kühlung die thermische Masse des Gebäudes entladen werden kann.

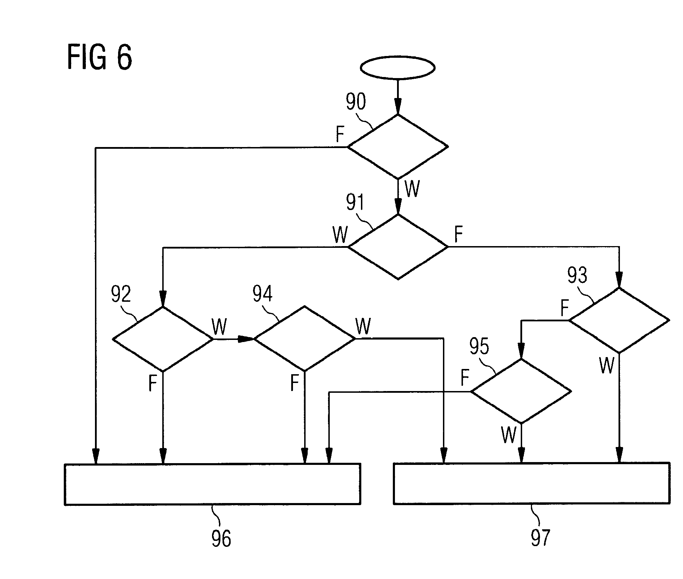

Die Fig. 6 illustriert mittels eines Ablaufdiagramms beispielhaft Regeln, nach denen Betriebszustandswerte des Betriebszustands "natürliche-Lüftung-nachts" der ersten Betriebsart 35 (Fig. 1) zum entsprechenden Steuern der Jalousien definiert und gesetzt werden.

In einer elften Entscheidung 90 wird der Boolsche Ausdruck "der Raum ist besetzt und es ist Nacht" ausgewertet, und, wenn der Ausdruck wahr ist, wird mit einer zwölften Entscheidung 91 weitergefahren, andernfalls wird in einem fünften Schritt 96 der Betriebszustand "natürliche-Lüftung-nachts" auf den Betriebszustandswert "Speicher-laden" gesetzt. In der zwölften Entscheidung 91 wird der Boolsche Ausdruck "im Zeitintervall 73 wurde Heizbedarf festgestellt" ausgewertet, und, wenn der Ausdruck wahr ist, wird mit einer dreizehnten Entscheidung 92, andernfalls mit einer vierzehnten Entscheidung 93 weitergefahren. In der dreizehnten Entscheidung 92 wird der Boolsche Ausdruck "im Zeitintervall 73 wurde Kühlbedarf festgestellt" ausgewertet, und, wenn der Ausdruck wahr ist, wird mit einer fünfzehnten Entscheidung 94 weitergefahren, andernfalls wird im fünften Schritt 96 der Betriebszustand "natürliche-Lüftung-nachts" auf den Betriebszustandswert "Speicher-laden" gesetzt. In der fünfzehnten Entscheidung 94 wird der Boolsche Ausdruck "die letzte Aktion war Heizen" ausgewertet, und, wenn der Ausdruck wahr ist, wird in einem sechsten Schritt 97 der Betriebszustand "natürliche-Lüftung-nachts" auf den Betriebszustandswert "Speicher-entladen" gesetzt, andernfalls wird der fünfte Schritt 96 ausgeführt, in dem der Betriebszustand "natürliche-Lüftung-nachts" auf den Betriebszustandswert "Speicher-laden" gesetzt wird. In der vierzehnten Entscheidung 93 wird der Boolsche Ausdruck "im Zeitintervall 73 wurde Kühlbedarf festgestellt" ausgewertet, und, wenn der Ausdruck wahr ist, wird der sechste Schritt 97 ausgeführt, in dem der Betriebszustand "natürliche-Lüftung-nachts" auf den Betriebszustandswert "Speicher-entladen" gesetzt wird, andernfalls wird mit einer sechzehnten Entscheidung 95 weitergefahren. In der sechzehnten Entscheidung 95 wird der Boolsche Ausdruck "die Raumtemperatur ist hoch" ausgewertet, und, wenn der Ausdruck wahr ist, wird der sechste Schritt 97 ausgeführt, in dem der Betriebszustand "natürliche-Lüftung-nachts" auf den Betriebszustandswert "Speicher-entladen" gesetzt wird, andernfalls wird der fünfte Schritt 96 ausgeführt, in dem der Betriebszustand "natürliche-Lüftung-nachts" auf den Betriebszustandswert "Speicher-laden" gesetzt wird. Eine vorteilhafte Konkretisierung des Boolschen Ausdrucks "die Raumtemperatur ist hoch" wird durch einen Vergleich der zweiten Temperaturdifferenz 71 (Fig. 3) mit der dritten Temperaturdifferenz 72, also durch den Boolschen Ausdruck Δϑ_{r,H} ≥ Δϑ_{,C} erreicht.

Abhängig vom - dem gesetzten Betriebszustandswert des Betriebszustands "natürliche-Lüftung-nachts" entsprechenden - Leitsignal 31, wird in der für die Bedienung der natürlichen Lüftung im Raum 8 zuständigen ersten Einrichtung 2 das Ausgangssignal Lüften 13 generiert.

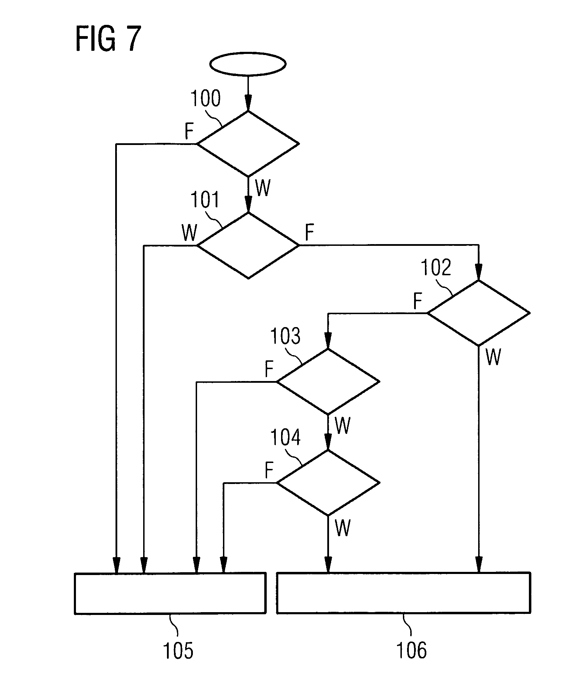

Die Fig. 7 illustriert mittels eines Ablaufdiagramms beispielhaft Regeln, nach denen Betriebszustandswerte des Betriebszustands "mechanische-Lüftung-nachts" der ersten Betriebsart 35 (Fig. 1) zum entsprechenden Steuern oder Regeln einer Einrichtung zum mechanischen Lüften mittels kostengünstiger Energie definiert und gesetzt werden.

In einer siebzehnten Entscheidung 100 wird der Boolsche Ausdruck "der Raum ist besetzt und es ist Nacht" ausgewertet, und, wenn der Ausdruck wahr ist, wird mit einer achtzehnten Entscheidung 101 weitergefahren, andernfalls wird in einem siebten Schritt 105 der Betriebszustand "mechanische-Lüftung-nachts" auf den Betriebszustandswert "Speicher-laden" gesetzt. In der achtzehnten Entscheidung 101 wird der Boolsche Ausdruck "im Zeitintervall 73 wurde Heizbedarf festgestellt" ausgewertet, und, wenn der Ausdruck wahr ist, wird der siebte Schritt 105 ausgeführt, in dem der Betriebszustand "mechanische-Lüftung-nachts" auf den Betriebszustandswert "Speicher-laden" gesetzt wird, andernfalls wird mit einer neunzehnten Entscheidung 102 weitergefahren. In der neunzehnten Entscheidung 102 wird der Boolsche Ausdruck "im Zeitintervall 73 wurde Kühlbedarf festgestellt und keine freie Kühlung" ausgewertet, und, wenn der Ausdruck wahr ist, wird ein achter Schritt 106 ausgeführt, in dem der Betriebszustand "mechanische-Lüftung-nachts" auf den Betriebszustandswert "Speicher-entladen" gesetzt wird, andernfalls wird mit einer zwanzigsten Entscheidung 103 weitergefahren. In der zwanzigsten Entscheidung 103 wird der Boolsche Ausdruck "die Raumtemperatur ist hoch" ausgewertet, und, wenn der Ausdruck wahr ist, wird mit einer einundzwanzigsten Entscheidung 104 weitergefahren, andernfalls wird im siebten Schritt 112 der Betriebszustand "mechanische-Lüftung-nachts" auf den Betriebszustandswert "Speicher-laden" gesetzt. Eine vorteilhafte Konkretisierung des Boolschen Ausdrucks "die Raumtemperatur ist hoch" wird durch einen Vergleich der zweiten Temperaturdifferenz 71 (Fig. 3) mit der dritten Temperaturdifferenz 72, also durch den Boolschen Ausdruck Δϑ_{r,H} ≥ Δϑ_{r,C} erreicht. In der einundzwanzigsten Entscheidung 104 wird der Boolsche Ausdruck "möglicherweise überschreitet die Raumtemperatur den oberen Temperatur-Sollwert" ausgewertet, und, wenn der Ausdruck wahr ist, wird der achte Schritt 106 ausgeführt, in dem der Betriebszustand "mechanische-Lüftung-nachts" auf den Betriebszustandswert "Speicher-entladen" gesetzt wird, andernfalls wird der siebte Schritt 105 ausgeführt, in dem der Betriebszustand "mechanische-Lüftung-nachts" auf den Betriebszustandswert "Speicher-laden" gesetzt wird.

Abhängig vom - dem gesetzten Betriebszustandswert des Betriebszustands "mechanische-Lüftung-nachts" entsprechenden - Leitsignal 31, wird in der für die Bedienung der mechanischen Lüftung im Raum 8 zuständigen ersten Einrichtung 2 das Ausgangssignal Lüften 13 generiert.

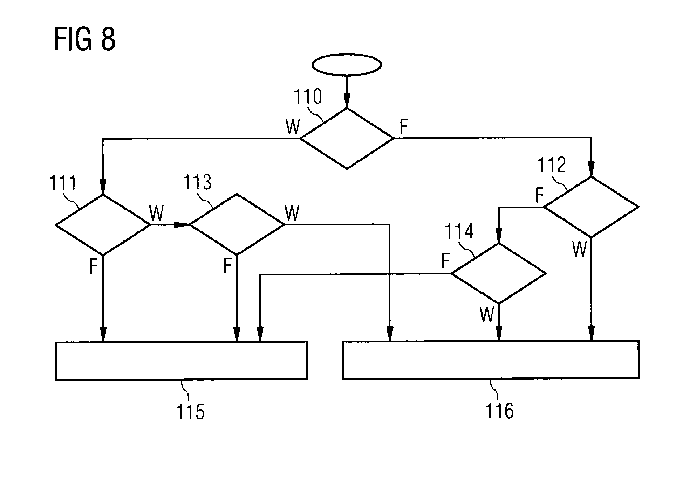

Die Fig. 8 illustriert mittels eines Ablaufdiagramms beispielhaft Regeln, nach denen Betriebszustandswerte des Betriebszustands "Wärme-Rückgewinnung" der dritten Betriebsart 37 (Fig. 1) zum entsprechenden Steuern der Luftaufbereitungsanlage 40 definiert und gesetzt werden.

In einer zweiundzwanzigsten Entscheidung 110 wird der Boolsche Ausdruck "im Zeitintervall 73 wurde Heizbedarf festgestellt" ausgewertet, und, wenn der Ausdruck wahr ist, wird mit einer dreiundzwanzigsten Entscheidung 111, andernfalls mit einer vierundzwanzigsten Entscheidung 112 weitergefahren. In der dreiundzwanzigsten Entscheidung 111 wird der Boolsche Ausdruck "im Zeitintervall 73 wurde Kühlbedarf festgestellt" ausgewertet, und, wenn der Ausdruck wahr ist, wird mit einer fünfundzwanzigsten Entscheidung 113 weitergefahren, andernfalls wird in einem neunten Schritt 115 der Betriebszustand "Wärme-Rückgewinnung" auf den Betriebszustandswert "Speicher-laden" gesetzt. In der fünfundzwanzigsten Entscheidung 113 wird der Boolsche Ausdruck "die letzte Aktion war Heizen" ausgewertet, und, wenn der Ausdruck wahr ist, wird in einem zehnten Schritt 116 der Betriebszustand "Wärme-Rückgewinnung" auf den Betriebszustandswert "Speicher-entladen" gesetzt, andernfalls wird der neunte Schritt 115 ausgeführt, in dem der Betriebszustand "Wärme-Rückgewinnung" auf den Betriebszustandswert "Speicher-laden" gesetzt wird. In der vierundzwanzigsten Entscheidung 112 wird der Boolsche Ausdruck "im Zeitintervall 73 wurde Kühlbedarf festgestellt" ausgewertet, und, wenn der Ausdruck wahr ist, wird der zehnte Schritt 116 ausgeführt, in dem der Betriebszustand "WärmeRückgewinnung" auf den Betriebszustandswert "Speicher-entladen" gesetzt wird, andernfalls wird mit einer sechsundzwanzigsten Entscheidung 114 weitergefahren. In der sechsundzwanzigsten Entscheidung 114 wird der Boolsche Ausdruck "die Raumtemperatur ist hoch" ausgewertet, und, wenn der Ausdruck wahr ist, wird der zehnte Schritt 116 ausgeführt, in dem der Betriebszustand "Wärme-Rückgewinnung" auf den Betriebszustandswert "Speicher-entladen" gesetzt wird, andernfalls wird der neunte Schritt 115 ausgeführt, in dem der Betriebszustand "Wärme-Rückgewinnung" auf den Betriebszustandswert "Speicher-laden" gesetzt wird. Eine vorteilhafte Konkretisierung des Boolschen Ausdrucks "die Raumtemperatur ist hoch" wird durch einen Vergleich der zweiten Temperaturdifferenz 71 (Fig. 3) mit der dritten Temperaturdifferenz 72, also durch den Boolschen Ausdruck Δϑ_{r,H} ≥ Δϑ_{r,C} erreicht.

Abhängig vom - dem gesetzten Betriebszustandswert des Betriebszustands "Wärme-Rückgewinnung" entsprechenden - Leitsignal 33, werden in der für die Bedienung der Wärmerückgewinnung im Raum 8 zuständigen Luftaufbereitungsanlage 40 notwendige Stellsignale generiert.

### Bezugszeichen

- 1: Steuereinrichtung
- 2-7: Einrichtung zur unterlagerten Regelung und/oder Steuerung
- 2: , erste
- 3: , dritte
- 4: , fünfte
- 5: , zweite
- 6: , vierte
- 7: , sechste
- 8, 9: Raum
- 10-15: Ausgangssignale der Rege- und/oder Steuereinrichtungen zur Steuerung von Gewerken
- 10: Heizen
- 11: Kühlen
- 12: freies Kühlen
- 13: Lüften
- 14: Sonnenschutz
- 15: Beleuchten
- 20: Messgrösse, erste
- 21: Messgrössen, weitere
- 30: Datenfluss
- 31, 32, 33: Leitsignal
- 35: Betriebsart, erste
- 36: Betriebsart, zweite
- 37: Betriebsart, dritte
- 40: Luftaufbereitungsanlage
- 50, 51, 52, 53: Dateneingang, weiterer
- 60: Funktionseinheit
- 61: Anzeigeeinheit
- 70: Temperaturdifferenz, erste
- 71: Temperaturdifferenz, zweite
- 72: Temperaturdifferenz, dritte
- 73: Zeitintervall
- R1: Raumgerät
- B1: Tageslichtfühler
- D1: Fensterschalter
- D2: Präsenzmelder
- D12: Bedieneinheit
- Q3: Jalousieantrieb
- D10: Bedieneinheit, weitere
- Q1: Leuchtkörper
- YH: Heizventil
- YC: Kühlventil
- D3: Taupunktfühler
- B2: Aussentemperaturfühler
- 75: Entscheidung, erste
- 76: Entscheidung, zweite
- 77: Entscheidung, dritte
- 78: Entscheidung, vierte
- 79: Entscheidung, fünfte
- 80: Schritt, erster
- 81: Schritt, zweiter
- 83: Entscheidung, sechste
- 84: Entscheidung, siebte
- 85: Entscheidung, achte
- 86: Entscheidung, neunte
- 87: Entscheidung, zehnte
- 88: Schritt, dritter
- 89: Schritt, vierter
- 90: Entscheidung, elfte
- 91: Entscheidung, zwölfte
- 92: Entscheidung, dreizehnte
- 93: Entscheidung, vierzehnte
- 94: Entscheidung, fünfzehnte
- 95: Entscheidung, sechzehnte
- 96: Schritt, fünfter
- 97: Schritt, sechster
- 100: Entscheidung, siebzehnte
- 101: Entscheidung, achtzehnte
- 102: Entscheidung, neunzehnte
- 103: Entscheidung, zwanzigste
- 104: Entscheidung, einundzwanzigste
- 105: Schritt, siebter
- 106: Schritt, achter
- 110: Entscheidung, zweiundzwanzigste
- 111: Entscheidung, dreiundzwanzigste
- 112: Entscheidung, vierundzwanzigste
- 113: Entscheidung, fünfundzwanzigste
- 114: Entscheidung, sechsundzwanzigste
- 115: Schritt, neunter
- 116: Schritt, zehnter

- T_{R1}, T_{R2}: Raumtemperatur
- T_{r,H}: unterer Temperatur-Sollwert
- T_{r,C}: oberer Temperatur-Sollwert
- Δϑ_{r,H}: Differenz zum unteren Temperatur-Sollwert
- Δϑ_{r,C}: Differenz zum oberen Temperatur-Sollwert

### Betriebszustandswerte:

freie-Kühlung.Speicher-laden
freie-Kühlung.Speicher-entladen
natürliche-Lüftung-nachts.Speicher-laden
natürliche-Lüftung-nachts.Speicher-entladen
mechanische-Lüftung-nachts.Speicher-laden
mechanische-Lüftung-nachts.Speicher-entladen
Wärme-Rückgewinnung.Speicher-laden
Wärme-Rückgewinnung.Speicher-entladen
Jalousienposition.Speicher-laden
Jalousienposition.Speicher-entladen
Jalousienposition.fest-positioniert

## Patentansprüche

1. Verfahren zur Steuerung und Regelung mindestens einer Raumkomfortgrösse (T_{R1}; T_{R2}) in einem Gebäude, **dadurch gekennzeichnet,**
**dass** Bedarfssignale (30) für kostenintensive Energie während einem eine bestimmte Zeitdauer umfassenden Zeitintervall (73) abgespeichert werden, und
**dass** die in dem vergangenen Zeitintervall (73) abgespeicherte Bedarfssignale (30) ausgewertet und zur Generierung von aktuellen Steuersignalen (10, 11 .. 15) für Stellglieder zur Nutzung von sogenannt freier oder kostengünstiger Energie verwendet werden.

2. Verfahren nach Anspruch 1, **dadurch gekennzeichnet, dass** zur Generierung der besagten Steuersignale (10, 11 .. 15) auch im vergangenen, die bestimmte Zeitdauer umfassenden Zeitintervall (73) abgespeicherte Daten (70, 71, 72) der mindestens einen Raumkomfortgrösse (T_{R1}; T_{R2}) ausgewertet werden.

3. Verfahren nach einem vorangehenden Anspruch, **dadurch gekennzeichnet,**
**dass** ein mit einem unteren Grenzwert (T_{r,H}) und einem oberen Grenzwert (T_{r,C}) begrenztes Raumtemperatursollwertband auswählbar ist, in welches die Raumtemperatur (T_{R1}; T_{R2}) eingeregelt wird.

4. Verfahren nach Anspruch 3, **dadurch gekennzeichnet,**
**dass** die im vergangenen Zeitintervall (73) abgespeicherten Grenzwerte (T_{r,H} und T_{r,C}) des Raumtemperatursollwertbandes zur Generierung der besagten Steuersignale (10, 11 .. 15) mitberücksichtigt werden.

5. Verfahren nach einem vorangehenden Anspruch, **dadurch gekennzeichnet,**
**dass** die im vergangenen Zeitintervall (73) abgespeicherten Raumtemperaturwerte (T_{R1,} T_{R2}) zur Generierung der besagten Steuersignale (10, 11 .. 15) mitberücksichtigt werden.

6. Verfahren nach Anspruch 4 oder 5, **dadurch gekennzeichnet, dass** zur Generierung der besagten Steuersignale (10, 11 .. 15) eine Differenz (71, 72) zwischen den im vergangenen Zeitintervall abgespeicherten Raumtemperaturwerten (T_{R1}, T_{R2}) und den Grenzwerten (T_{r,H} ; T_{r,C}) des Raumtemperatursollwertbandes mitbestimmend ist.

7. Verfahren nach einem vorangehenden Anspruch, **dadurch gekennzeichnet,**
**dass** mit Hilfe der im vergangenen Zeitintervall abgespeicherten Bedarfssignale (30) für kostenintensive Energie entschieden wird, ob ein Heizen oder ein Kühlen der als thermischer Speicher wirksamen Masse des Gebäudes mit freier oder kostengünstiger Energie forciert wird oder nicht.

8. Verfahren nach einem vorangehenden Anspruch, **dadurch gekennzeichnet,**
**dass** wenigstens ein Betriebszustandswert (35; 36; 37) selbsttätig ermittelt und abgespeichert und damit gesetzt wird, wobei zur Ermittlung des Betriebszustandswerts die in dem vergangenen Zeitintervall (73) abgespeicherten Bedarfssignale (30) ausgewertet werden und gesetzte Betriebszustandswerte (35; 36; 37) zur Generierung von aktuellen Steuersignalen (10, 11 .. 15) für Stellglieder zur Nutzung von sogenannt freier oder kostengünstiger Energie verwendet werden.

9. Verfahren nach einem vorangehenden Anspruch, **gekennzeichnet durch**
wenigstens zwei auf Jalousien bezogene Betriebszustandswerte (Jalousienposition.Speicher-laden; Jalousienposition.Speicher-entladen),
wobei ein das Laden der als thermischer Speicher wirksamen Masse des Gebäudes auslösender Betriebszustandswert (Jalousienposition.Speicher-laden) oder ein das Entladen der als thermischer Speicher wirksamen Masse des Gebäudes auslösender Betriebszustandswert (Jalousienposition.Speicher-entladen) **durch** Auswerten eines im vergangenen Zeitintervall (73) abgespeicherten Signals für einen Wärmebedarf und eines im vergangenen Zeitintervall abgespeicherten Signals für einen Kältebedarf ermittelt wird.

10. Verfahren nach einem vorangehenden Anspruch, **gekennzeichnet durch**
wenigstens zwei auf kostengünstige Kühlung bezogene Betriebszustandswerte (Freie-Kühlung.Speicher-laden; Freie-Kühlung.Speicher-entladen),
wobei ein das Laden der als thermischer Speicher wirksamen Masse des Gebäudes auslösender Betriebszustandswert (Freie-Kühlung.Speicher-laden) oder ein das Entladen der als thermischer Speicher wirksamen Masse des Gebäudes auslösender Betriebszustandswert (Freie-Kühlung.Speicher-entladen) **durch** Auswerten eines im vergangenen Zeitintervall (73) abgespeicherten Signals für einen Wärmebedarf und eines im vergangenen Zeitintervall (73) abgespeicherten Signals für einen Kältebedarf ermittelt wird.

11. Verfahren nach einem vorangehenden Anspruch,
**gekennzeichnet durch**
wenigstens zwei auf natürliche Lüftung in der Nacht bezogene Betriebszustandswerte (natürliche-Lüftung-nachts.Speicher-laden; natürliche-Lüftung-nachts.Speicher-entladen),
wobei eine das Laden der als thermischer Speicher wirksamen Masse des Gebäudes auslösender Betriebszustandswert (natürliche-Lüftung-nachts.Speicher-laden) oder ein das Entladen der als thermischer Speicher wirksamen Masse des Gebäudes auslösender Betriebszustandswert (natürliche-Lüftung-nachts.Speicher-entladen) **durch** Auswerten eines im vergangenen Zeitintervall abgespeicherten Signals für einen Wärmebedarf und eines im vergangenen Zeitintervall abgespeicherten Signals für einen Kältebedarf ermittelt wird.

12. Verfahren nach einem vorangehenden Anspruch,
**gekennzeichnet durch**
wenigstens zwei auf mechanische Lüftung in der Nacht bezogene Betriebszustandswerte (mechanische-Lüftung-nachts.Speicher-laden; mechanische-Lüftung-nachts.Speicher-entladen), wobei eine das Laden der als thermischer Speicher wirksamen Masse des Gebäudes auslösender Betriebszustandswert (mechanische-Lüftung-nachts.Speicher-laden) oder ein das Entladen der als thermischer Speicher wirksamen Masse des Gebäudes auslösender Betriebszustandswert (mechanische-Lüftung-nachts.Speicher-entladen) **durch** Auswerten eines im vergangenen Zeitintervall abgespeicherten Signals für einen Wärmebedarf und eines im vergangenen Zeitintervall abgespeicherten Signals für einen Kältebedarf ermittelt wird.

13. Verfahren nach einem vorangehenden Anspruch,
**gekennzeichnet durch**
wenigstens zwei auf Wärmerückgewinnung bezogene Betriebszustandswerte (Wärme-Rückgewinnung.Speicher-laden; Wärme-Rückgewinnung.Speicher-entladen), wobei ein das Laden der als thermischer Speicher wirksamen Masse des Gebäudes auslösender Betriebszustandswert (WärmeRückgewinnung.Speicher-laden) oder ein das Entladen der als thermischer Speicher wirksamen Masse des Gebäudes auslösender Betriebszustandswert (Wärme-Rückgewinnung.Speicher-entladen) **durch** Auswerten eines im vergangenen Zeitintervall abgespeicherten Signals für einen Wärmebedarf und eines im vergangenen Zeitintervall abgespeicherten Signals für einen Kältebedarf ausgewertet werden.

14. Verfahren nach einem der vorangehenden Ansprüche 8 bis 11, **dadurch gekennzeichnet,**
**dass** beim Festlegen des Betriebszustandswerts mitberücksichtigt wird, ob ein Gebäuderaum belegt ist.

15. Verfahren nach einem vorangehenden Anspruch, **dadurch gekennzeichnet,**
**dass** die Zeitdauer des vergangenen Zeitintervalls (73) zwischen etwa 6 und etwa 72 Stunden beträgt.

16. Verfahren nach einem vorangehenden Anspruch, **dadurch gekennzeichnet,**
**dass** die Zeitdauer des vergangenen Zeitintervalls (73) etwa 24 Stunden beträgt.

17. Anordnung mit einer wenigstens zwei Ebenen aufweisenden hierarchischen Struktur zur Steuerung und Regelung mindestens einer Raumkomfortgrösse (T_{R1}; T_{R2}) in einem Gebäude,
mit wenigstens einer in einer oberen Ebene angeordneten Einrichtung (1) zur optimierbaren Steuerung und Regelung der Verwendung wenigstens einer kostengünstigen oder freien Energiequelle, und
mit wenigstens einer in einer der oberen Ebene untergeordneten unteren Ebene angeordneter Einrichtung (2; 3; 4; 5; 6; 7) zur unterlagerten Regelung oder Steuerung der Verwendung wenigstens einer weiteren Energiequelle,
wobei eine Raumkomfortgrösse die Raumtemperatur ist und die Regelstrategie der übergeordneten Einrichtung (1) sich Eigenschaften eines passiven Wärmespeichers des Gebäudes nutzbar macht, und wobei anstelle eines Raumtemperatur-Sollwerts ein mit einem unteren Wert (T_{r,H}) und einem oberen Wert (T_{r,C}) begrenztes Raumtemperatursollwertband auswählbar ist, in welches die Raumtemperatur einregelbar ist,
**gekennzeichnet durch** Mittel zur Durchführung eines Verfahrens nach einem der Ansprüche 1 bis 16, wobei die besagten Mittel einen von der unteren Ebene zur oberen Ebene führender Datenfluss (30) und von der oberen Ebene generierte und in der unteren Ebene verfügbare Leitsignale (31, 32, 33) umfasst.

18. Anordnung nach Anspruch 17, **dadurch gekennzeichnet, dass** eine weitere Raumkomfortgrösse die durch elektrische Leuchtkörper und/oder durch Fenster leitbares Sonnenlicht steuerbare Helligkeit ist.

19. Anordnung nach einem der Ansprüche 17 oder 18, **dadurch gekennzeichnet, dass** die kostengünstige oder freie Energiequelle eine Strahlung ist, die mittels steuerbarer Durchlässigkeit von Fenstern und/oder Fassaden in das Gebäude oder aus dem Gebäude leitbar ist.

20. Anordnung nach einem der Ansprüche 17 bis 19, **gekennzeichnet durch** eine im Gebäude angeordnete Einrichtung (61) zur Visualisierung mindestens eines Betriebszustandswerts der Anordnung.
